# FASCICULE DE BREVET EUROPEEN

(11) **EP 0 893 702 B1**
(45) Date de publication et mention de la délivrance du brevet: **13.08.2003**
(21) Numéro de dépôt: 98401620.4
(22) Date de dépôt: 29.06.1998
(51) Int. Cl.: G01S 5/14, G01S 1/04

(54) **Récepteur destiné à l'acquisition de signaux radioélectriques, notamment de signaux émis par des satellites**
Erfassung von Satellitensignalen für einen Empfänger
Satellite signal acquisition receiver

(30) Priorité: 30.06.1997 FR 9708226
(43) Date de publication de la demande: 27.01.1999
(73) Titulaire: MLR ELECTRONIQUE, F-44330 Vallet (FR)
(72) Inventeur: Lamiraux, Christian, 44230 St Sebastien sur Loire (FR); Raffegeau, Jean-Pierre, 44690 La Haie Fouassiere (FR)
(74) Mandataire: Guérin, Michel

(56) Documents cités:
- EP-A- 0 099 191
- EP-A- 0 450 750
- EP-A- 0 572 082
- US-A- 4 607 237
- US-A- 4 746 879
- US-A- 4 779 063
- PATENT ABSTRACTS OF JAPAN vol. 018, no. 627 (P-1834), 29 novembre 1994 & JP 06 242208 A (MATSUSHITA ELECTRIC IND CO LTD), 2 septembre 1994
- PATENT ABSTRACTS OF JAPAN vol. 95, no. 008 & JP 07 218612 A (JAPAN RADIO CO LTD), 18 août 1995
- PATENT ABSTRACTS OF JAPAN vol. 013, no. 146 (P-854), 11 avril 1989 & JP 63 308587 A (JAPAN RADIO CO LTD), 15 décembre 1988

## Description

L'invention concerne un récepteur destiné à l'acquisition de signaux radioélectriques, notamment de signaux émis par des satellites, du type comprenant essentiellement une antenne de réception des signaux, un dispositif corrélateur comprenant au moins une voie à filtre-corrélateur pour l'acquisition des signaux émis d'un satellite, un processeur adapté pour indiquer à la voie la fréquence centrale pour l'acquisition des signaux, et un dispositif oscillateur pilote.

Dans des récepteurs de ce type, par exemple ceux du système GPS, l'oscillateur pilote engendre par synthèse de fréquence les signaux de transposition permettant de transposer des signaux à recevoir à un niveau de fréquence relativement bas et dans une bande passante suffisamment étroite pour permettre l'extraction de signaux dans le bruit.

Il s'avère que dans un récepteur GPS, la précision de la fréquence finale doit être typiquement de ± 500 Hz du fait de la longueur du codage pseudo-aléatoire GPS code CA qui a une durée de 1 ms. La fréquence porteuse L1 du signal GPS valant 1,5 GHz, la précision requise de l'oscillateur est typiquement de ± 500/1,5 x 10⁹ = ± 3,3 x 10⁻⁷.

Pour assurer cette précision, il est connu d'équiper les récepteurs GPS d'un oscillateur pilote relativement coûteux. Dans la mesure où il est connu que la qualité de l'oscillateur est liée notamment au processus interne de compensation de la dérive en fréquence du quartz de l'oscillateur en fonction de la température, l'instabilité dite de vieillissement du quartz étant relativement faible devant une instabilité thermique, on utilise des oscillateurs compensés en températures. Or c'est notamment cette mesure qui augmente le coût de l'oscillateur.

Une autre solution souvent retenue est d'utiliser un oscillateur de moins de précision et d'effectuer à la mise en route la recherche d'un premier satellite sur plusieurs bandes de fréquences espacées de 1 KHz. Or, ceci entraîne une perte dans le temps d'acquisition qui suit la mise en route d'un récepteur et réduit la sécurité de détection du corrélateur GPS de 1 ms.

La présente invention a pour but de proposer un récepteur du type indiqué plus haut qui pallie les inconvénients qui viennent d'être énoncés des récepteurs de l'état de la technique.

Pour atteindre ce but, l'oscillateur pilote comprend un quartz sans compensation thermique interne, un capteur de température est associé à l'oscillateur et le processeur est pourvu de moyens d'ajustage de la fréquence centrale de la voie d'acquisition à indiquer au dispositif corrélateur en fonction de la température ambiante de l'oscillateur pilote.

Selon une caractéristique avantageuse de l'invention, les moyens d'ajustage des fréquences centrales de la voie d'acquisition sont formés par un logiciel d'étalonnage pourvu d'un tableau de mise en relation des dérives thermique en fréquence de l'oscillateur et des températures ambiantes de celui-ci.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels :
- la figure 1 est un schéma bloc d'un premier mode de réalisation selon l'art antérieur et
- la figure 2 est un schéma bloc d'un deuxième mode de réalisation selon l'invention.

Comme le montrent les figures, un récepteur d'acquisition des signaux radioélectriques, notamment de signaux émis par des satellites, comprend essentiellement une antenne de réception 1 des signaux à acquérir, une unité 2 comprenant un certain nombre de canaux d'acquisition pour acquérir simultanément les signaux émis par plusieurs satellites, un processeur 3 de commande de l'unité d'acquisition 2 et un dispositif oscillateur pilote 4.

L'unité d'acquisition comprend un montage en série d'un dispositif à amplificateurs et filtres 6 et un dispositif corrélateur 7 comprenant un certain nombre de voies d'acquisition, chacune pourvus d'un filtre-corrélateur numérique. Ces dispositifs sont connus en soi et ne seront pas décrits plus en détail.

Au dispositif d'entrée à amplificateurs et filtres 6 est associé, de façon connu en soi, un dispositif d'oscillateurs de transposition, qui est asservi à l'oscillateur local 4, comme cela est montré par les lignes fléchées, et sert pour établir les fréquences permettant la transposition des signaux reçus par l'antenne 1 à un niveau de fréquence relativement bas et dans une bande passante suffisamment étroite pour permettre l'extraction du signal utile du bruit dans le dispositif corrélateur 7 sur lequel agit directement l'oscillateur pilote 4.

Le dispositif oscillateur 4 selon l'invention comprend un oscillateur à quartz nu 9, c'est-à-dire sans compensation thermique interne. A cet oscillateur est associé un capteur 10 de la température ambiante proche du quartz.

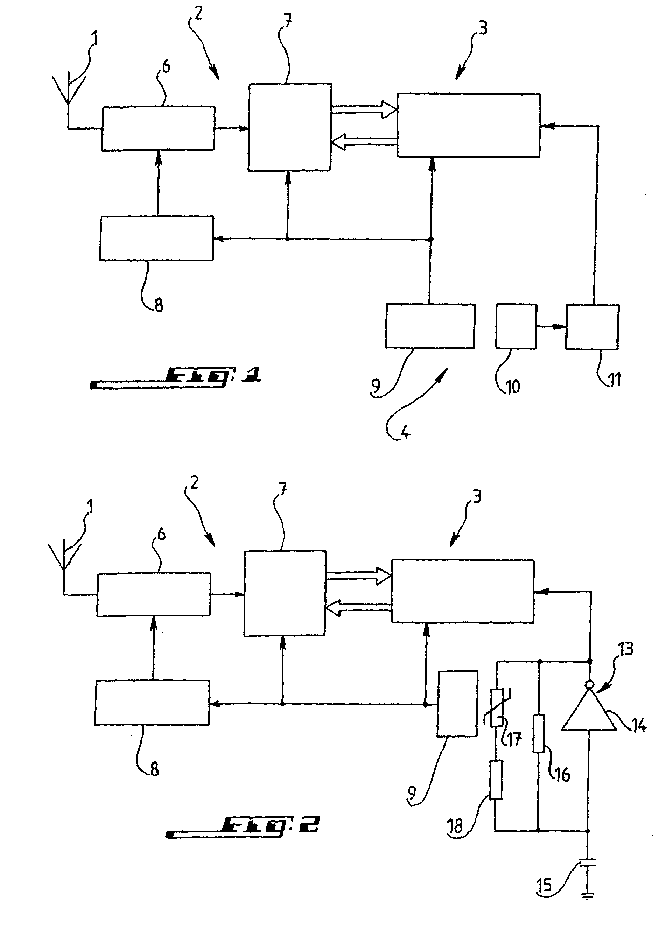

Dans le mode de réalisation selon l'art antérieur et d'après la figure 1, les valeurs mesurées sont transmises à un convertisseur analogique-numérique 11 qui les transmet au processeur 3 sous forme de signaux numériques. Un tel dispositif est décrit dans le document JP 07218612.

Dans le mode de réalisation selon l'invention et d'après la figure 2, le convertisseur analogique-numérique 11 est remplacé par un oscillateur basse fréquence 13. Celui-ci comprend une porte logique 14 par exemple du type 74 HC 14 dont la sortie est reliée au processeur 3 tandis que son entrée est mise à la masse par l'intermédiaire d'un condensateur 15. L'entrée et la sortie de la porte 14 sont reliées par un montage en parallèle comprenant, d'une part, une résistance 16 et, d'autre part, le montage en série d'une thermistance 17 et d'une résistance 18. Dans ce mode de réalisation 2, la thermistance 17 constitue le capteur de température ambiante.

L'oscillateur 13 est adapté pour fonctionner dans une plage de fréquences de 100 à 400 KHz pour couvrir la plage de la variation de la température de la thermistance agissant sur la fréquence de l'oscillateur de façon linéaire. Le processeur 3 qui est muni de moyen fréquence mètre ou programmé pour accomplir cette fonction, établit une valeur numérique représentative de la température de la thermistance. La caractéristique de cette dernière peut être déterminée en fonction des dérives thermiques des composants de l'oscillateur.

L'utilisation de l'oscillateur basse fréquence 13 présente l'avantage d'être d'un coût beaucoup faible que le convertisseur analogique-numérique 11, du fait qu'il ne comprend que des composants standards, d'un faible coût.

Grâce au capteur de température 10 ou 17, on établit un tableau des écarts de fréquence de l'oscillateur pilote 9 en fonction de la température ambiante de l'oscillateur.

Le tableau est établi par un logiciel qui est géré par le processeur. Pour cela, on s'assure que l'ensemble formé par le capteur 10 et le convertisseur 11 produit des signaux à peu près linéaires pour la gamme de températures d'utilisation par exemple comprises entre-20°C à 70°C et que le transfert des données peut être établi approximativement à 1 bit/degré de manière à surveiller une centaine de valeurs de températures différentes. Un tel tableau établi dans le logiciel peut par exemple avoir 256 lignes pour couvrir 256 états possibles chacun étant constitué par un couple de valeurs de température et d'écart de fréquence occassionné par cette température.

On décrira ci-après l'établissement du tableau et le fonctionnement du récepteur selon l'invention.

A la première mise en service du récepteur, les deux séries de valeurs sont mises à zéro. La fréquence de l'oscillateur est ajustée à mieux de 250 Hz tout en maintenant la température du quartz à une valeur centrale de par exemple 25°C pendant la durée de temps pendant laquelle le récepteur acquiert les satellites visibles, établit la position géographique du récepteur capte les données de l'almanach GPS et établit la valeur de l'écart de fréquence d'oscillateur.

Pendant cette première mise en route du récepteur qui a pour but d'assurer le calage du récepteur à des conditions définies, un drapeau du logiciel est placé à la valeur numérique 0. Une fois le calage terminé, l'opérateur place une mémoire drapeau à 1, ce qui autorise le déroulement du logiciel d'établissement du tableau sus-mentionné. La valeur d'écart d'oscillateur initiale s'inscrit dans une ligne centrale du tableau et le récepteur est ensuite soumis à une rampe de températures allant de par exemple -20°C à +70°C, chaque pas occasionnant l'inscription d'une paire de mots caractérisant un état dans le tableau.

En régime d'exploitation, après que le tableau a été rempli, le logiciel lors de l'acquisition d'un satellite et, le cas échéant, périodiquement pendant le fonctionnement, procède à la lecture des valeurs de mesure de la température ambiante de l'oscillateur 9, et cherche pour la température mesurée l'écart de la fréquence d'oscillateur dans le tableau. C'est en prenant en compte cette valeur que le processeur 3 indique au dispositif corrélateur les fréquences centrales des voies d'acquisition des signaux satellites. Par conséquent, même si la fréquence de l'oscillateur a varié en raison d'une variation de la température ambiante de la valeur de référence, l'acquisition des satellites peut s'effectuer rapidement.

Si l'acquisition n'est pas assurée, le processeur commande un balayage de la fréquence centrale de la voie d'acquisition considérée dans une gamme de fréquences de par exemple 500 Hz autour de la valeur indiquée par le tableau. Si la fréquence centrale finalement trouvée lors du balayage dépasse une valeur de seuil d'écart admissible, de par exemple 150 Hz, de la valeur indiquée en fonction du tableau, le programme permet d'actualiser le tableau en cours d'exploitation. Cette actualisation pourrait se faire sous forme d'un décalage de l'ensemble des données inscrites dans le tableau de la valeur d'écart constatée. Ce décalage de l'ensemble du tableau pourrait être effectué déjà lors d'une première constatation d'un écart ou après un certain nombre de fois, en considérant qu'il s'agit alors d'une dérive due au vieillissement de l'oscillateur.

La description du récepteur selon l'invention, qui vient d'être faite en se référant à la figure 2, montre que l'invention permet d'accroître la vitesse d'acquisition des signaux radioélectriques sélectionnés tout en réduisant le coût et l'encombrement du récepteur par rapport aux récepteurs connus grâce à l'emploi d'un oscillateur à quartz nu, d'un capteur de température associé à celui-ci et du logiciel décrit, à la place des systèmes à oscillateur compensé ou stabilisé en température selon l'état de la technique.

## Revendications

1. Récepteur destiné à l'acquisition de signaux radioélectriques, notamment de signaux émis par des satellites, du type comprenant essentiellement une antenne de réception des signaux, un dispositif corrélateur comprenant au moins une voie à filtre-corrélateur pour l'acquisition des signaux reçus, un processeur adapté pour indiquer à la voie d'acquisition la fréquence centrale pour l'acquisition des signaux, et un dispositif oscillateur pilote, l'oscillateur pilote comprenant un quartz sans compensation thermique interne et un capteur de température associé à l'oscillateur pour mesurer la température ambiante de ce dernier et le processeur étant pourvu de moyens d'ajustage de la fréquence centrale de la voie d'acquisition à indiquer à cette voie, en fonction d'une variation mesurée de la température ambiante de l'oscillateur pilote (4) **caractérisé en ce que** le capteur de température est formé par une thermistance (17) faisant partie d'un oscillateur basse fréquence (13) dont la sortie est reliée au processeur (3).

2. Récepteur selon la revendication 1, **caractérisé en ce que** les moyens d'ajustage de la fréquence centrale de la voie d'acquisition du dispositif corrélateur (7) sont formés par un logiciel d'étalonnage comportant un tableau de mise en relation des températures ambiantes de l'oscillateur et des dérives thermiques en fréquence occasionnées par celles-ci.

3. Récepteur selon l'une des revendications 1 ou 2, **caractérisé en ce qu'**un convertisseur analogique-numérique est associé au capteur de température (10) pour appliquer les valeurs de mesure de température au processeur (3), sous forme de données numériques.

4. Récepteur selon l'une des revendications 1 à 3, **caractérisé en ce que** l'oscillateur basse fréquence (13) comprend une porte logique (14) et, entre les bornes d'entrée et de sortie de cette porte un montage en parallèle, d'une part, d'une résistance (16) et, d'autre part, de la thermistance (17) et d'une résistance (18) montées en série, l'entrée de la porte étant reliée à la masse par un condensateur (15).

5. Récepteur selon la revendication 4, **caractérisé en ce que** les composants constituant l'oscillateur (13) sont des composants standards d'un faible coût.

6. Récepteur selon l'une des revendications 4 ou 5, **caractérisé en ce que** le processeur est muni de moyens de mesure des fréquences et établit une valeur numérique représentative de la température de la thermistance (17).

7. Récepteur selon l'une des revendications 2 à 6, **caractérisé en ce que** le tableau comprend un certain nombre de lignes chacune comportant deux mots formés respectivement par une valeur de variation de températures et l'écart de fréquence produit par celle-ci, par rapport à une condition de référence.

8. Récepteur selon la revendication 7, **caractérisé en ce que** les conditions de référence sont établies lors de l'acquisition des signaux d'un satellite à une température ambiante prédéterminée du quartz de l'oscillateur.

9. Récepteur selon l'une des revendications précédentes, **caractérisé en ce que** le processeur est adapté pour établir la valeur de la fréquence centrale à indiquer à une voie d'acquisition en recherchant dans le tableau la valeur d'écart de fréquence associée à la valeur de température mesurée par le capteur (10) à l'instant de l'acquisition.

10. Récepteur selon l'une des revendications 2 à 9, **caractérisé en ce que** les écarts de fréquence inscrits dans le tableau sont susceptibles d'être décalés dans leur ensemble lorsque, lors d'une acquisition d'un signal, l'écart de la fréquence centrale d'acquisition réelle diffère de la fréquence centrale indiquée par le processeur en fonction du tableau d'une valeur de fréquence prédéterminée.

## Patentansprüche

1. Empfänger zur Erfassung von Funksignalen, insbesondere von Signalen, die von Satelliten ausgesendet wurden, der im wesentlichen eine Antenne zum Empfang der Signale, eine Korrelationsvorrichtung mit mindestens einem Filter-Korrelationskanal zur Erfassung der empfangenen Signale, einen Prozessor, um dem Erfassungskanal die Mittelfrequenz für die Erfassung der Signale anzugeben, sowie eine Pilotoszillator-Vorrichtung enthält, wobei der Pilotoszillator einen Quarz ohne interne Wärmekompensation und eine Temperaturmeßsonde aufweist, die dem Oszillator zugeordnet ist, um die in der Umgebung des Oszillator herrschende Temperatur zu messen, und wobei der Prozessor Mittel zur Justierung der dem Erfassungskanal zuzuweisenden. Mittelfrequenz abhängig von einer gemessenen Änderung der Umgebungstemperatur des Pilotoszillators (4) aufweist, **dadurch gekennzeichnet, daß** die Temperatur-Meßsonde von einem Thermistor (17) gebildet wird, der Teil eines Niederfrequenzoszillators (13) ist, welcher ausgangsseitig mit dem Prozessor (3) verbunden ist.

2. Empfänger nach Anspruch 1, **dadurch gekennzeichnet, daß** die Mittel zur Justierung der Mittelfrequenz des Erfassungskanals der Korrelationsvorrichtung (7) von einer Eich-Software gebildet werden, die eine Tabelle mit den Temperaturwerten in der Umgebung des Oszillators und den durch Temperaturänderungen hervorgerufenen Frequenzabweichungen enthält.

3. Empfänger nach einem der Ansprüche 1 und 2, **dadurch gekennzeichnet, daß** ein Analog/Digitalwandler der Temperaturmeßsonde (10) zugeordnet ist, um die Temperaturmeßwerte dem Prozessor (3) in Form digitaler Daten zuzuführen.

4. Empfänger nach einem der Ansprüche 1 bis 3, **dadurch gekennzeichnet, daß** der Niederfrequenzoszillator (13) ein logisches Tor (14) sowie zwischen den Eingangs- und Ausgangsklemmen dieses Tors eine Parallelschaltung einerseits aus einem Widerstand (16) und andrerseits de²m Thermistor (17) und einem Widerstand (18) in Reihe aufweist, wobei der Eingang des Tors über einen Kondensator (15) an Masse liegt.

5. Empfänger nach Anspruch 4, **dadurch gekennzeichnet, daß** die den Oszillator (13) bildenden Bauelemente preiswerte Standard-Bauelemente sind.

6. Empfänger nach einem der Ansprüche 4 und 5, **dadurch gekennzeichnet, daß** der Prozessor Mittel zur Messung der Frequenzen aufweist und einen digitalen Wert bildet, der für die Temperatur des Thermistors (17) repräsentativ ist.

7. Empfänger nach einem der Ansprüche 2 bis 6, **dadurch gekennzeichnet, daß** die Tabelle eine bestimmte Anzahl von Zeilen enthält, die je zwei Wörter enthalten, von denen das eine einen Wert der Temperaturveränderung und das andere einen Wert der dadurch hervorgerufenen Frequenzabweichung im Vergleich zu Standardbedingungen darstellt.

8. Empfänger nach Anspruch 7, **dadurch gekennzeichnet, daß** die Standardbedingungen bei der Erfassung der Signale von einem Satelliten ermittelt werden, während der Quarz des Oszillators sich bei einer vorbestimmten Umgebungstemperatur befindet.

9. Empfänger nach einem der vorstehenden Ansprüche, **dadurch gekennzeichnet, daß** der Prozessor den Wert der Mittelfrequenz, der einem Erfassungskanal anzugeben ist, bilden kann, indem in der Tabelle der Wert der Frequenzabweichung gesucht wird, der dem Wert der von der Temperaturmeßsonde (10) im Erfassungszeitpunkt gemessenen Temperatur zugeordnet ist.

10. Empfänger nach einem der Ansprüche 2 bis 9, **dadurch gekennzeichnet, daß** die Frequenzabweichungen, die in der Tabelle enthalten sind, insgesamt verschoben werden können, wenn bei einer Erfassung eines Signals der Abstand zwischen der tatsächlichen Mittelfrequenz bei der Erfassung und der vom Prozessor abhängig von der Tabelle gelieferten Mittelfrequenz um einen vorbestimmten Wert abweicht.

## Claims

1. Receiver intended for acquiring radio signals, in particular signals transmitted by satellites, of the type comprising essentially an antenna for receiving the signals, a correlator device comprising at least one correlator-filter pathway for acquiring the signals received, a processor suitable for indicating the central frequency for the acquisition of the signals to the acquisition pathway, and a drive oscillator device, the drive oscillator comprising a quartz crystal with no internal thermal compensation and a temperature sensor associated with the oscillator for measuring the latter's ambient temperature and the processor being provided with means for adjusting the central frequency of the acquisition pathway to be indicated to this pathway, as a function of a measured variation of the ambient temperature of the drive oscillator (4), **characterized in that** the temperature sensor is formed by a thermistor (17) forming part of a low-frequency oscillator (13) whose output is linked to the processor (3).

2. Receiver according to Claim 1, **characterized in that** the means of adjusting the central frequency of the acquisition pathway of the correlator device (7) are formed by calibration software comprising a table for matching the ambient temperatures of the oscillator with the thermal frequency drifting caused by them.

3. Receiver according to either of Claims 1 and 2, **characterized in that** an analogue/digital converter is associated with the temperature sensor (10) for applying the temperature measurement values to the processor (3), in the form of digital data.

4. Receiver according to one of Claims 1 to 3, **characterized in that** the low-frequency oscillator (13) comprises a logic gate (14) and, between the input and output terminals of this gate, a parallel arrangement, on the one hand, of a resistor (16) and, on the other hand, of the thermistor (17) and of a resistor (18) which are arranged in series, the input of the gate being linked to earth through a capacitor (15).

5. Receiver according to Claim 4, **characterized in that** the components constituting the oscillator (13) are standard low-cost components.

6. Receiver according to either of Claims 4 and 5, **characterized in that** the processor is furnished with means for measuring the frequencies and establishes a numerical value representative of the temperature of the thermistor (17).

7. Receiver according to one of Claims 2 to 6, **characterized in that** the table comprises a certain number of rows each comprising two words formed respectively by a temperature variation value and the frequency offset produced thereby, with respect to a reference condition.

8. Receiver according to Claim 7, **characterized in that** the reference conditions are established during the acquisition of the signals from a satellite at a predetermined ambient temperature of the quartz crystal of the oscillator.

9. Receiver according to one of the preceding claims, **characterized in that** the processor is suitable for establishing the value of the central frequency to be indicated to an acquisition pathway by searching through the table for the frequency offset value associated with the temperature value measured by the sensor (10) at the instant of acquisition.

10. Receiver according to one of Claims 2 to 9, **characterized in that** the frequency offsets registered in the table can be shifted as a whole when, during an acquisition of a signal, the offset of the actual central acquisition frequency differs from the central frequency indicated by the processor as a function of the table by a predetermined frequency value.
